# FASCICULE DE BREVET EUROPEEN

(11) **EP 1 109 089 B1**
(45) Date de publication et mention de la délivrance du brevet: **10.08.2005**
(21) Numéro de dépôt: 00470021.7
(22) Date de dépôt: 06.12.2000
(51) Int. Cl.: G06F 1/00, G06F 12/14

(54) **Procédé non déterministe de transfert sécurisé de données**
Verfahren für nicht deterministische gesicherte Datenübertragung
Process for non-deterministic transfer of secured data

(30) Priorité: 15.12.1999 FR 9915796
(43) Date de publication de la demande: 20.06.2001
(73) Titulaire: STMicroelectronics S.A., 92120 Montrouge (FR)
(72) Inventeur: Teglia, Yannick, Cabinet Ballot, 57070 Metz (FR)
(74) Mandataire: Bentz, Jean-Paul

(56) Documents cités:
- EP-A- 0 809 171
- EP-A- 0 908 810
- US-A- 5 944 833

## Description

L'invention a pour objet un procédé de transfert sécurisé de données dans un circuit programmable. En particulier, l'invention vise à protéger d'une éventuelle inspection les données contenues dans une mémoire lors de leur transfert vers une autre mémoire. L'invention s'applique notamment, mais pas uniquement, à tout circuit programmable utilisant des données secrètes.

Les données secrètes sont par exemple des données personnelles identifiant le propriétaire du circuit programmable, des instructions de programme ou bien des clés d'algorithmes de cryptage de données. Les données secrètes sont le plus souvent stockées dans des mémoires mortes du circuit programmable à la fabrication de celui-ci. Des moyens connus sont utilisés pour protéger le contenu des mémoires mortes d'une inspection visuelle. A titre d'exemple, les données peuvent être éparpillées dans la mémoire. Cependant, lorsqu'elles sont utilisées, les données secrètes transitent en clair sur un bus de données qu'il est facile d'espionner.

Une technique d'espionnage classique consiste à mesurer le courant qui circule dans le bus ; il est en effet représentatif de la donnée qui transite sur le bus. Il suffit alors de réaliser K mesures de courant lors de K transits de la même donnée et de moyenner ces K mesures pour éliminer le bruit de la mesure et obtenir la valeur exacte de la donnée. A titre indicatif, il est nécessaire de réaliser environ K = 1000 mesures pour éliminer le bruit et obtenir la valeur exacte de la donnée qui transite sur le bus. Cette technique d'espionnage est connue sous l'expression anglo-saxone "Simple Power Analysis".

De plus, afin de réduire les coûts de fabrication des produits, les données secrètes sont souvent en partie les mêmes pour une famille donnée de circuits programmables. Aussi, si un espion arrive à lire les données secrètes mémorisées dans un produit, il pourra les utiliser pour toute une famille de produits.

Un but de l'invention est d'améliorer la sécurité des données dans un circuit programmable, et en particulier lors de leur transit sur le bus de données. Pour atteindre ce but, l'invention concerne un procédé de transfert sécurisé de données dans un circuit programmable comprenant au moins une unité de commande, une mémoire morte comprenant des données à transférer, une mémoire inscriptible et un bus de données connecté entre la mémoire morte et la mémoire inscriptible, le bus de données étant commandé par l'unité de commande.

Le procédé de transfert de l'invention est caractérisé en ce qu'une donnée secrète de N octets transite octet par octet sur le bus de données, chaque octet transitant au moins une fois sur le bus de données, en ce que le poids d'un octet à transférer est égal à un indice courant choisi aléatoirement avant chaque transfert d'un octet et compris entre 0 et N-1, et en ce que, à chaque transfert d'un octet de la donnée secrète de poids égal à l'indice courant, un bit de même poids d'un indicateur de chargement de N bits est modifié, en fonction d'un mode de chargement, le mode de chargement étant un nombre entier compris entre 0 et une première constante et modifié avant chaque transfert d'un octet de la donnée secrète, le transfert de la donnée secrète étant réalisé complètement lorsque l'indicateur de chargement prend une valeur prédéterminée.

Le procédé de l'invention consiste donc à transférer les octets d'une donnée secrète sur le bus dans un ordre choisi aléatoirement par l'unité de commande gérant le bus de données, le poids de chaque octet à transférer étant choisi aléatoirement avant chaque transfert dudit octet et le nombre de transits d'un même octet sur le bus étant aléatoire. Afin de contrôler que tous les octets d'une donnée secrète ont effectivement été transférés, un indicateur de chargement est modifié lorsque le chargement d'un octet est correctement effectué. Le transfert de tous les octets de la donnée secrète est terminé lorsque l'indicateur de chargement prend une valeur prédéfinie. Ainsi, avec l'invention, à chaque transfert d'une même donnée, l'ordre de transfert des octets de la donnée est différent, et chaque octet de la donnée est transféré un nombre de fois différent à chaque transfert complet de la donnée. Les méthodes d'espionnage couramment utilisées ne suffisent donc plus pour obtenir la valeur exacte d'une donnée secrète transitant sur le bus de données. En effet, avec l'invention, la trace laissée sur le bus par la donnée lors de son transit sur le bus de données est différente et dure plus ou moins longtemps à chaque transfert de la même donnée.

Selon un mode de réalisation, le mode de chargement est choisi aléatoirement par l'unité de commande avant chaque transfert d'un octet de la donnée secrète. Le bit de l'indicateur de chargement de poids égal à l'indice courant prend une première valeur si le mode de chargement est égal à une seconde constante, et prend une seconde valeur sinon, la seconde constante étant inférieure ou égale à la première constante.

Selon un mode préféré de réalisation, un octet de poids égal à l'indice courant de la donnée secrète transite sur le bus de données si le mode de chargement est égal à la seconde constante, et un octet de poids égal à l'indice courant d'une fausse donnée transite sur le bus de données dans le cas contraire, la fausse donnée étant mémorisée dans la mémoire morte. Sur le bus de données, les octets de la donnée secrète sont ainsi mélangés aux octets d'une fausse donnée, pour augmenter la complexité du procédé de l'invention.

Les première et seconde constantes peuvent être choisies égales ou bien différentes ; de plus elles peuvent être mémorisées dans la mémoire morte du circuit programmable ou bien être choisies aléatoirement lors d'une étape d'initialisation du procédé.

Le procédé de l'invention comprend de préférence les étapes suivantes :
E0 : initialisation du procédé,
E1 : Choix de l'indice courant, compris entre 0 et N-1,
E2 : Choix du mode de chargement, compris entre 0 et la première constante,
E3 : Chargement, dans la mémoire vive, de l'octet de la donnée secrète de poids égal à l'indice courant, et modification du bit de même poids de l'indicateur de chargement, en fonction du mode de chargement.
E4 : réalisation d'un premier test pour comparer la valeur de l'indicateur de chargement à une valeur prédéterminée, puis - si le premier test est négatif, réalisation de nouvelles étapes E1 à E3, ou bien, - si le premier test est positif, le procédé se termine.

L'invention concerne également un circuit programmable comprenant au moins une unité de commande une mémoire morte comprenant des données à transférer, une mémoire inscriptible et un bus de données connecté entre la mémoire morte et la mémoire inscriptible, le bus de données étant commandé par l'unité de commande, le circuit programmable étant caractérisé en ce qu'il comprend en outre un générateur de nombres aléatoires pour fournir à l'unité de commande au moins un nombre aléatoire, le circuit programmable étant adapté à mettre en oeuvre le procédé de l'invention.

Il est à noter que dans la description ci-dessus de l'invention, ainsi que dans toute la description d'un mode de réalisation qui va suivre, l'expression "poids d'un octet" fait référence au rang ou au numéro d'un octet de la donnée secrète. En d'autre terme, une donnée secrète comprend N octets et chaque octet est repéré par un poids compris entre 0 et N-1, l'octet de poids 0 correspondant aux huit de poids les plus faibles et l'octet de poids N-1 correspondant aux huit bits de poids les plus forts de la donnée secrète.

L'invention sera mieux comprise et d'autres caractéristiques et avantages apparaîtront à la lecture de la description qui va suivre, la description faisant référence au dessin annexé dans lequel :
- la figure 1 est un schéma-bloc d'un circuit programmable mettant en oeuvre l'invention,
- la figure 2 est un diagramme d'un algorithme de mise en oeuvre d'un transfert sécurisé de données, selon l'invention.

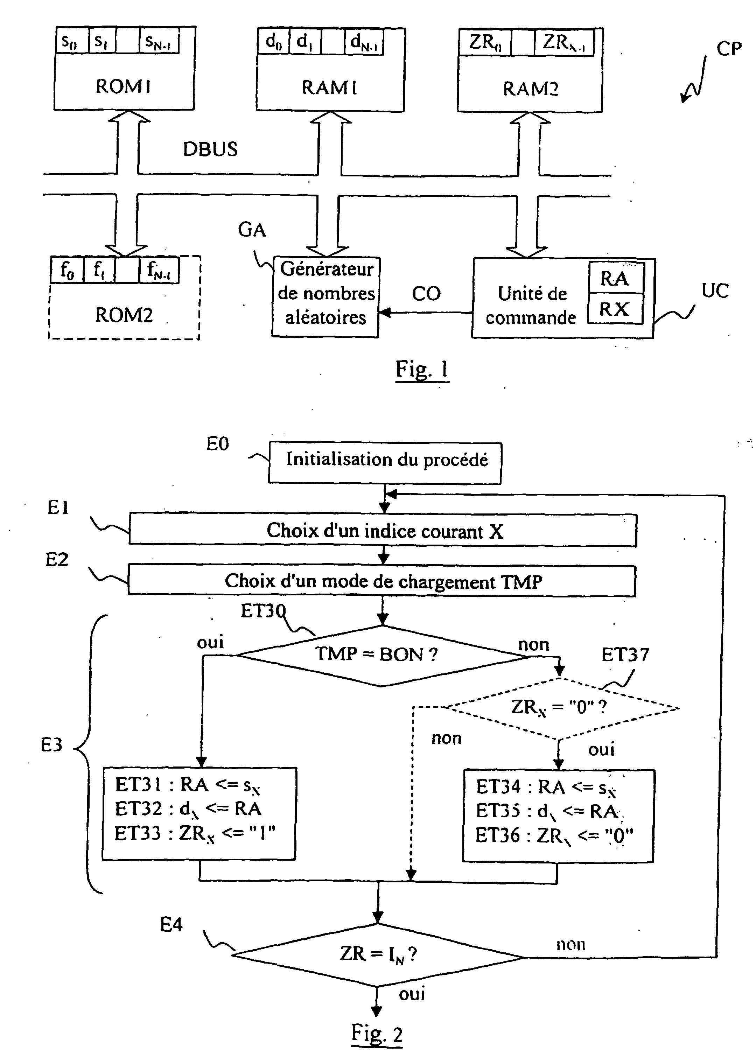

Le circuit programmable CP de la figure 1 comprend une mémoire morte ROM1 qui contient une donnée secrète de N octets mémorisée à des adresses S₀ à s_{N-1}, une première et une seconde mémoires vives RAM1, RAM2, une unité de commande UC, un générateur de nombres aléatoires GA et un bus de données DBUS qui relie tous les éléments les uns aux autres.

Les mémoires vives RAM1, RAM2 sont des mémoires inscriptibles ou ré-inscriptibles, par exemple de type EPROM ou EEPROM. Le générateur de nombres aléatoires GA est un circuit connu qui peut fournir, en réponse à une instruction CO de l'unité de commande UC, des nombres entiers aléatoires compris entre 0 et un nombre entier MAX, par exemple égal à 255. L'unité de commande UC reçoit des instructions contenues dans la mémoire morte ROM1 et contrôle, entre autres, les mémoires vives RAM1, RAM2 et le générateur de nombres aléatoires GA. L'unité de commande UC comprend deux registres RA et RX.

Bien sûr, le circuit programmable CP comprend également d'autres éléments tels que par exemple des registres de données ou d'instructions, des circuits de calcul arithmétique et logique, des compteurs, des circuits d'horloge ou bien des ports d'entrées et/ou de sorties. Le circuit programmable peut également comprendre plusieurs mémoires vives, plusieurs mémoires mortes et/ou plusieurs générateurs de nombres aléatoires. De plus, tous les éléments du circuit programmable CP peuvent éventuellement communiquer avec un ou plusieurs autres éléments, par l'intermédiaire de bus de commande, de bus de données et/ou de bus d'adresses. Cependant, par souci de simplification, seuls les éléments du circuit programmable CP strictement nécessaires à la compréhension de l'invention ont été représentés sur la figure 1.

Dans un exemple ci-dessous, la donnée secrète de la mémoire morte ROM1 du circuit programmable CP doit être transférée vers la première mémoire vive RAM1 à des adresses d₀ à d_{N-1} pour être utilisée ultérieurement. Dans l'exemple, N est choisi égal à 4.

Le procédé de l'invention consiste à transférer la donnée secrète octet par octet, l'ensemble des octets étant transféré dans un ordre différent à chaque transfert de la donnée et chaque octet étant transféré une ou plusieurs fois lors d'un même transfert de la donnée. Pour cela, le procédé de l'invention utilise une loi de transfert ayant un ou plusieurs paramètre(s) choisi(s) aléatoirement par l'unité de commande UC soit avant chaque transit de la donnée secrète sur le bus de donnée, soit avant chaque transit d'un octet de la donnée secrète.

Selon un mode de réalisation, le procédé de l'invention comprend les étapes suivantes, conformément à la figure 2 :
E0 : initialisation du procédé :
   ET01 : mise à zéro de tous les bits d'un indicateur de chargement ZR de N bits mémorisé dans la mémoire vive RAM2.
   ET02 : lecture dans la mémoire morte ROM1 d'une constante NBCH et mémorisation de cette constante dans le registre RX de l'unité de commande UC.
   ET03 : lecture dans la mémoire morte ROM1 d'une constante BON et mémorisation de cette constante dans le registre RX de l'unité de commande UC.
E1 : Choix d'un indice courant X, compris entre 0 et N-1.
E2 : Choix d'un mode de chargement TMP, compris entre 0 et la valeur de la constante NBCH.
E3 : Chargement, dans la mémoire vive RAM1, de l'octet de la donnée secrète de poids égal à l'indice courant X, et modification du bit ZR_{X} de même poids X de l'indicateur de chargement ZR, en fonction du mode de chargement TMP.
E4 : réalisation d'un premier test pour comparer la valeur de l'indicateur de chargement ZR à une valeur prédéterminée I_{N}, qui est un mot de N bits dont tous les bits sont égaux à "1"; puis :
   - si le premier test est négatif (ZR ≠ I_{N}), réalisation de nouvelles étapes E1 à E3, ou bien,
   - si le premier test est positif (ZR = I_{N}), le procédé se termine.

L'étape E3 du procédé de la figure 2 se décompose de la manière suivante :
E3 : réalisation d'un second test ET30 pour comparer la valeur du mode de chargement TMP à la valeur de la constante BON, puis :
   - si le second test est positif (TMP = BON), réalisation des étapes ET31 à ET33 :
      ET31 : lecture de l'octet Oct_{X} de poids X de la donnée à transférer, situé à l'adresse S_{X} de la mémoire morte ROM1, et mémorisation de l'octet lu dans le registre RA de l'unité de commande UC,
      ET32 : écriture à l'adresse d_{X} de la mémoire vive RAM1 de l'octet contenu dans le registre RA.
      ET33 : mise à "1" du bit ZR_{X} de poids X de l'indicateur de chargement ZR.
   - si le second test est négatif (TMP ≠ BON), réalisation des étapes ET34 à ET36 :
      ET34 : dans le premier mode de réalisation, l'étape ET34 est identique à l'étape ET31, c'est-à-dire : lecture de l'octet Oct_{X} de poids X de la donnée à transférer, situé à l'adresse S_{X} de la mémoire morte ROM1,
      ET35 : dans le premier mode de réalisation, l'étape ET35 est identique à l'étape ET32, c'est-à-dire : mémorisation de l'octet lu dans le registre RA de l'unité de commande UC puis écriture, à l'adresse d_{X} de la mémoire vive RAM1, de l'octet contenu dans le registre RA.
      ET36 : mise à "0" du bit ZR_{X} de poids X de l'indicateur de chargement ZR.

Dans l'exemple, les constantes NBCH et BON sont deux données mémorisées dans la mémoire morte ROM1 qui sont telles que BON est inférieure ou égale à NBCH. Le choix de la constante NBCH est en général un compromis entre une sécurité maximale du procédé et un temps moyen de chargement d'une donnée acceptable. En effet, la sécurité du procédé de transfert ainsi que le temps moyen de chargement d'une donnée dans la mémoire vive RAM1 augmentent lorsque la valeur de la constante NBCH augmente. Dans l'exemple, NBCH est choisie égale à 3. La constante BON prend une valeur quelconque entre 0 et NBCH, la valeur de BON n'a aucune influence sur la sécurité du procédé ou le temps moyen de transfert d'une donnée.

La loi de transfert du procédé définit l'ordre dans lequel les octets de la donnée sont transférés de la mémoire morte ROM1 vers la mémoire vive RAM1 ainsi que le nombre de transferts d'un même octet de la donnée lors du transfert de la donnée complète. En d'autres termes, la loi de transfert définit les variations de l'indice courant X au cours du procédé de transfert de la donnée secrète. D'une manière générale, le procédé de l'invention utilise une loi de transfert comprenant deux paramètres.

Le premier paramètre X (également appelé indice courant), compris entre 0 et N-1, définit le poids de l'octet à transférer au cours de la réalisation d'une étape E3.

Le second paramètre TMP, compris entre 0 et la valeur NBCH indique si le chargement de l'octet Oct_{X} de poids X, au cours de l'étape E3, doit être pris en compte ou pas. Si le paramètre TMP est égal à la constante BON (premier test ET30), alors le transfert de l'octet Oct_{X} est pris en compte, c'est-à-dire qu'on considère que l'octet Oct_{X} a été effectivement transféré. L' indicateur de chargement ZR est modifié en conséquence, c'est-à-dire que le bit ZR_{X} de poids X de l'indicateur de chargement prend la valeur logique "1" au cours de l'étape ET33. Inversement, si le second paramètre TMP a une valeur comprise entre 0 et NBCH mais différente de la constante BON, alors le transfert de l'octet Oct_{X} de la donnée secrète n'est pas pris en compte, c'est-à-dire qu'on considère que l'octet n'a pas réellement été transféré. L'indicateur de chargement ZR est modifié en conséquence, c'est-à-dire que le ZR_{X} bit de poids X de ZR prend la valeur logique "0" au cours de l'étape ET36.

Selon un mode de réalisation de l'invention, les paramètres X et TMP sont choisis aléatoirement au cours de la réalisation des étapes E1 et E2 du procédé de la manière suivante. Lors de la réalisation d'une étape E1 du procédé, le générateur GA fournit un premier nombre aléatoire à l'unité de commande UC lorsqu'un premier signal de commande CO₁ est reçu. Eventuellement, si le premier nombre aléatoire est supérieur à N, l'unité de commande le réduit modulo N pour obtenir un indice courant X compris entre 0 et N-1, X est ensuite mémorisé dans le registre RX. Puis, lors de la réalisation de l'étape E2, le générateur GA fournit un second nombre aléatoire à l'unité de commande UC lorsqu'un second signal de commande CO₂ est reçu. Eventuellement, si le second nombre aléatoire est supérieur à NBCH, l'unité de commande le réduit modulo (NBCH + 1) afin d'obtenir un mode de chargement TMP compris entre 0 et NBCH, TMP est ensuite mémorisé dans le registre RX de l'unité de commande UC.

L'indicateur de chargement ZR est un nombre binaire de N bits, mémorisé dans la mémoire vive RAM2, qui permet de contrôler l'évolution du chargement de la donnée dans la mémoire vive. En effet, l'indicateur de chargement ZR indique si le transfert d'un octet de la donnée secrète dans la mémoire vive RAM1 a été pris en compte ou pas et si le transfert de tous les octets de la donnée secrète a été pris en compte ou pas. Par exemple, si le bit ZR_{X} de poids X de la variable ZR est égal à "1", alors le chargement de l'octet Oct_{X} de la donnée secrète dans la mémoire vive RAM1 a été pris en compte. Inversement, si le bit ZR_{X} de poids X de ZR est égal à "0", alors le chargement de l'octet Oct_{X} de la donnée secrète n'a pas été pris en compte.

L'indicateur de chargement ZR est modifié lors de chaque réalisation d'une étape E3, et plus particulièrement lors de la réalisation d'une étape ET33 ou d'une étape ET36. Lors de la réalisation de l'étape E4, le procédé vérifie si tous les bits de la variable ZR sont égaux à "1", c'est-à-dire si le transfert de tous les octets de la donnée secrète a été pris en compte ou pas.

L'indicateur de chargement est initialisé lors de l'étape E0, dans l'exemple tous les bits de ZR sont mis à "0" ; il est ensuite modifié ou pas au cours du procédé en fonction du paramètre X qui varie entre 0 et N-1 et en fonction du paramètre TMP, qui varie entre 0 et NBCH. Il existe ainsi (N*(NBCH+1))! manières différentes de transférer une même donnée de N octets dans la mémoire vive. De plus, le temps moyen de transfert de tous les octets de la donnée secrète est égal à N*(NBCH+1)*TPS, où TPS est le temps de transfert d'un octet de la mémoire vive RAM1 vers la mémoire morte ROM1.

Des améliorations peuvent être apportées au procédé de la figure 2, sans pour autant sortir du cadre de l'invention.

Par exemple, il est possible de transférer, en même temps que les octets de la donnée secrète, les octets d'une fausse donnée. On utilisera pour cela une fausse donnée mémorisée à des adresses f₀ à f_{N-1} d'une mémoire ROM2 (représentée en pointillés sur la figure 1) et on remplacera les étapes ET34 et ET35 du procédé par les étapes ET34' et ET35' suivantes :
ET34' : lecture de l'octet Oct_{X} de poids X de la fausse donnée, situé à l'adresse f_{X} de la mémoire morte ROM2 et mémorisation de l'octet lu dans le registre RA de l'unité de commande UC.
ET35' : écriture, à l'adresse d_{X} de la mémoire vive RAM1, de l'octet contenu dans le registre RA.

Lors de leur transit sur le bus de données DBUS, les octets de la donnée secrète sont ainsi mélangés à des octets d'une fausse donnée. Au cours d'une étape E3 du procédé, si le mode de chargement TMP est égal à BON, l'octet Oct_{X} de poids X de la donnée secrète transite sur le bus DBUS (étapes ET31 et ET32) et le bit ZR_{X} de poids X correspondant de l'indicateur ZR prend la valeur "1" (étape ET33). Inversement, si TMP est différent de BON, l'octet de poids X de la fausse donnée transite sur le bus DBUS (étapes ET34' et ET35') et le bit de poids X correspondant de l'indicateur ZR prend la valeur "0" (étape ET36). Cette amélioration rend encore plus difficile l'espionnage du bus de données DBUS car il n'est pas possible de prédire si un octet qui transite sur le bus est un octet de la donnée secrète ou bien un octet de la fausse donnée.

Pour que cette amélioration soit la plus efficace possible, il est nécessaire de choisir des mémoires ROM1, ROM2 de même nature, c'est-à-dire par exemple toutes les deux de type mémoire morte, ou toutes les deux de type mémoire inscriptible ou ré-inscriptible.

La fausse donnée est une donnée quelconque, éventuellement variable. Par exemple, la fausse donnée peut être choisie aléatoirement lors de l'étape d'initialisation du procédé E0. La fausse donnée peut également être située dans une zone de pile du circuit programmable qui est modifiée en permanence en fonction des activités de l'unité de commande UC. Il est cependant préférable de choisir une fausse donnée ayant le même poids de Hamming que la donnée secrète, c'est-à-dire une fausse donnée dont tous les octets ont le même nombre de bits à "1" (ou à "0") que les octets correspondants de la donnée secrète.

Le procédé de l'invention peut également être amélioré en effectuant l'étape E37 ou l'étape ET37' suivantes (représentées en pointillés sur la figure 2), dans le cas où le test de l'étape ET30 est négatif (TMP ≠ BON):
ET37 : test de la valeur du bit ZR_{X} de poids X de l'indicateur ZR, et réalisation des étapes ET31, ET32 et ET36 si ZR_{X} = "0", ou bien fin de l'étape E3 si ZR_{X} = "1"
ET37' : test de la valeur du bit ZR_{X} de poids X de l'indicateur ZR, et réalisation des étapes ET34 à ET36 si ZR_{X} = "0", ou bien fin de l'étape E3 si ZR_{X} = "1"

L'étape ET37 est réalisée dans le cas où seuls les octets de la donnée secrète transitent sur le bus de données. L'étape ET37' est, quant à elle, utilisée dans le cas où les octets de la donnée secrète et les octets de la fausse donnée transitent sur le bus de données.

Cette amélioration permet de limiter le temps moyen de transfert d'une donnée en évitant de charger inutilement un octet Oct_{X} lorsqu'il a déjà été pris en compte dans une précédente étape E3.

D'autres modifications peuvent être apportées au procédé de la figure 2. Par exemple, dans l'étape E0 d'initialisation du procédé, les constantes NBCH et BON sont lues dans la mémoire ROM1, puis mémorisées dans le registre RX. Cependant il est tout à fait possible de choisir des nombres NBCH et BON variables qui seront par exemple fournis par le générateur de nombres aléatoires GA lors de l'étape E0, BON doit toutefois être choisie inférieure à NBCH.

De plus, il est possible de choisir des constantes NBCH et BON identiques, ce qui permet entre autres de réduire le temps d'exécution de l'étape E0.

Il est également possible de choisir un paramètre TMP constant, égal à la constante BON. Dans ce cas, au cours de la réalisation du procédé, le test ET30 sera toujours positif et seules les étapes ET31 à ET33 seront exécutées. Cette modification présente l'avantage de réduire le temps moyen de transfert de la donnée car chaque octet est transféré une seule fois. Cependant elle limite également le nombre de manières différentes de charger une même donnée. En effet, si le paramètre TMP est maintenu constant, il n'y a plus que N! manières différentes de charger la donnée secrète, ce qui limite les performances globales du procédé.

Enfin, il est également possible, pour la réalisation de l'étape E4, de choisir comme valeur prédéfinie I_{N} un nombre binaire dont les N bits sont identiquement nuls. On aura soin dans ce cas, d'une part d'initialiser à "1" (et non pas à "0" comme précédemment) tous les bits de l'indicateur de chargement ZR lors de l'étape ET01, et d'autre part de remplacer l'étape E3 par l'étape E3' suivante:
E3' : réalisation du second test ET30 pour comparer la valeur du mode de chargement TMP à la valeur de la constante BON, puis :
   - si le second test est positif (TMP = BON), réalisation des étapes ET31, ET32 et ET36, ou
   - si le second test est négatif (TMP ≠ BON), réalisation des étapes ET34, ET 35 et ET33.

Des modifications peuvent également être apportées au circuit programmable CP sans modifier son fonctionnement global. Dans l'exemple de la figure 1, le circuit programmable CP comprend deux mémoires vives RAM1, RAM2. Il est également possible de remplacer ces deux mémoires par une unique mémoire vive, comprenant deux zones distinctes dans lesquelles seront mémorisés d'une part les octets de la donnée secrète transférée à des adresses d₀ à d_{N-1} et d'autre part, les N bits. ZR₀ à ZR_{N-1} de l'indicateur de chargement ZR. Les bits de la données secrète ainsi que ceux de l'indicateur de chargement pourraient également être éparpillés dans les mémoires mortes ROM1, ROM2, ou bien dans une seule.

De la même manière, les deux mémoires ROM1 et ROM2 peuvent être remplacées par une unique mémoire dans laquelle seront mémorisés les N octets de la donnée secrète et éventuellement les N octets de la fausse donnée.

Un avantage du procédé de l'invention est qu'il n'est pas possible de prévoir la durée du transfert d'une donnée secrète de la mémoire morte ROM1 vers la mémoire vive. En effet, les paramètres X et TMP étant choisis aléatoirement à chaque transfert d'un octet, il n'est pas possible de prédire l'instant où tous les octets de la donnée secrète seront transférés. Un tel procédé est dit non déterministe.

De même, il n'est pas possible de prédire l'ordre de transfert des octets de la donnée secrète puisque cet ordre est choisi aléatoirement et est différent à chaque transfert d'une même donnée.

La technique d'espionnage d'analyse de courant est donc inopérante avec un tel procédé. En effet, si K mesures de courant sont effectuées lors de K transferts de la même donnée sur le bus DBUS et si une moyenne de ces K mesures est effectuée pour éliminer le bruit de la mesure, le résultat moyen obtenu ne donnera aucune information sur la donnée secrète transférée puisqu'il n'est pas possible de prédire le nombre d'octets, ni l'ordre des octets de la donnée.

Un autre avantage de l'invention est de proposer un procédé de transfert de données qui peut être utilisé en parallèle avec d'autres procédés de protection de données, sans perturber le fonctionnement de ces derniers. Par exemple, dans la description ci-dessus, les adresses S₀ à S_{N-1} et d₀ à d_{N-1} ont été supposées consécutives dans les mémoires ROM1 et RAM1. Néanmoins, il serait tout-à-fait possible de transférer des données dont les octets sont éparpillés dans la mémoire ROM1.

## Revendications

1. Procédé de transfert sécurisé de données dans un circuit programmable (CP) comprenant au moins une unité de commande (UC), une mémoire morte (ROM1) comprenant des données à transférer, une mémoire inscriptible (RAM1) et un bus de données (DBUS) connecté entre la mémoire morte (ROM1) et la mémoire inscriptible (RAM1), le bus de données (DBUS) étant commandé par l'unité de commande (UC),
où une donnée secrète de N octets transite octet par octet sur le bus de données (DBUS), chaque octet transitant au moins une fois sur le bus de données (DBUS),
**caractérisé en ce que** le poids d'un octet à transférer est égal à un indice courant (X) choisi aléatoirement avant chaque transfert d'un octet et compris entre 0 et N-1, et
**en ce que**, à chaque transfert d'un octet de la donnée secrète de poids égal à l'indice courant (X), un bit de même poids (X) d'un indicateur de chargement (ZR) de N bits est modifié en fonction d'un mode de chargement (TMP), le mode de chargement (TMP) étant un nombre entier compris entre 0 et une première constante (NBCH) et modifié avant chaque transfert d'un octet de la donnée secrète, le transfert de la donnée secrète étant réalisé complètement lorsque l'indicateur de chargement (ZR) prend une valeur prédéterminée (I_{N}).

2. Procédé selon la revendication 1, **caractérisé en ce que** le mode de chargement (TMP) est choisi aléatoirement par l'unité de commande (UC) avant chaque transfert d'un octet de la donnée secrète.

3. Procédé selon l'une des revendications 1 ou 2, **caractérisé en ce que** le bit (ZR_{X}) de l'indicateur de chargement (ZR) de poids égal à l'indice courant (X) prend une première valeur ("1") si le mode de chargement (TMP) est égal à une seconde constante (BON), et prend une seconde valeur ("0") sinon, la seconde constante (BON) étant inférieure ou égale à la première constante (NBCH).

4. Procédé selon la revendication 3, **caractérisé en ce qu'**un octet de poids égal à l'indice courant (X) de la donnée secrète transite sur le bus de données (DBUS) si le mode de chargement (TMP) est égal à la seconde constante (BON), et **en ce qu'**un octet de poids égal à l'indice courant (X) d'une fausse donnée transite sur le bus de données (DBUS) dans le cas contraire, la fausse donnée étant mémorisée dans la mémoire morte (ROM1).

5. Procédé selon l'une des revendications 3 ou 4, **caractérisé en ce que** les première (NBCH) et seconde (BON) constantes sont choisies aléatoirement lors d'une étape d'initialisation (E0) du procédé.

6. Procédé selon l'une des revendications 3 ou 4, **caractérisé en ce que** les première (NBCH) et seconde (BON) constantes sont lues par l'unité de commande (UC) dans la mémoire morte (ROM1) lors de l'étape d'initialisation (E0) du procédé.

7. Procédé selon l'une des revendications 3 à 6, **caractérisé en ce que** les première (NBCH) et seconde (BON) constantes sont identiques.

8. Procédé de transfert selon la revendication 1, **caractérisé en ce qu'**il comprend les étapes suivantes :
E0 : initialisation du procédé,
E1 : Choix de l'indice courant (X), compris entre 0 et N-1,
E2 : Choix du mode de chargement (TMP), compris entre 0 et la première constante (NBCH),
E3 : Chargement, dans la mémoire vive (RAM1), d'un l'octet de poids égal à l'indice courant (X), et modification du bit (ZR_{X}) de même poids (X) de l'indicateur de chargement (ZR), en fonction du mode de chargement (TMP).
E4 : réalisation d'un premier test pour comparer la valeur de l'indicateur de chargement (ZR) à une valeur prédéterminée (I_{N}), puis :
- si le premier test est négatif (ZR ≠ I_{N}), réalisation de nouvelles étapes E1 à E3, ou bien,
- si le premier test est positif (ZR = I_{N}), le procédé se termine.

9. Procédé de transfert selon la revendication 8 **caractérisé en ce que** l'étape E3 comprend les sous-étapes suivantes :
ET30 : réalisation d'un second test pour comparer la valeur du mode de chargement (TMP) à la valeur de la seconde constante (BON), puis :
- si le second test (ET30) est positif (TMP = BON), réalisation des étapes ET31 à ET33 :
ET31 : lecture, dans la mémoire morte (ROM1), de l'octet (Oct_{X}) de poids égal à l'indice courant (X) de la donnée secrète à transférer, et mémorisation de l'octet lu dans un registre (RA) de l'unité de commande (UC),
ET32 : écriture, dans la mémoire vive (RAM1) de l'octet contenu dans le registre (RA).
ET33 : mise à "1" du bit (ZR_{X}) de poids égal à l'indice courant (X) de l'indicateur de chargement (ZR).
- si le second test (ET30) est négatif (TMP ≠ BON), réalisation des étapes ET31, ET32 précédentes et de l'étape ET36 suivante :
ET36 : mise à "0" du bit ZR_{X} de poids égal à l'indice courant (X) de l'indicateur de chargement (ZR).

10. Procédé selon la revendication 9, **caractérisé en ce que**, si le second test est négatif (TMP ≠ BON), l'étape ET37 est réalisée immédiatement après le second test (ET30), l'étape ET37 étant définie de la manière suivante :
ET37 : test de la valeur du bit (ZR_{X}) de poids égal à l'indice courant (X) de l'indicateur (ZR), puis réalisation des étapes ET31, ET32 et ET36 si ZR_{X} = "0", ou bien fin de l'étape E3 si ZR_{X} = "1".

11. Procédé de transfert selon la revendication 8 **caractérisé en ce que** l'étape E3 comprend les sous-étapes suivantes :
ET30 : réalisation d'un second test pour comparer la valeur du mode de chargement (TMP) à la valeur de la seconde constante (BON), puis :
- si le second test (ET30) est positif (TMP = BON), réalisation des étapes ET31 à ET33 suivantes
ET31 : lecture, dans la mémoire morte (ROM1), de l'octet (Oct_{X}) de poids égal à l'indice courant (X) de la donnée secrète à transférer, et mémorisation de l'octet lu dans un registre (RA) de l'unité de commande (UC),
ET32 : écriture, dans la mémoire vive (RAM1) de l'octet contenu dans le registre (RA).
ET33 : mise à "1" du bit (ZR_{X}) de poids égal à l'indice courant (X) de l'indicateur de chargement (ZR).
- si le second test (ET30) est négatif (TMP ≠ BON), réalisation des étapes ET34 à ET36 suivantes :
ET34 : lecture, dans la mémoire morte (ROM1), d'un octet d'une fausse donnée, le poids de l'octet lu étant égal à l'indice courant (X) puis mémorisation de l'octet lu dans le registre (RA) de l'unité de commande (UC),
ET35 : écriture, dans la mémoire vive (RAM1) de l'octet contenu dans le registre (RA).
ET36 : mise à "0" du bit ZR_{X} de poids égal à l'indice courant (X) de l'indicateur de chargement (ZR).

12. Procédé selon la revendication 11, **caractérisé en ce que**, si le second test (ET30) est négatif (TMP ≠ BON), l'étape ET37' est réalisée immédiatement après le second test (ET30), l'étape ET37' étant définie de la manière suivante :
ET37' : test de la valeur du bit (ZR_{X}) de poids égal à l'indice courant (X) de l'indicateur (ZR), puis réalisation des étapes ET34 à ET36 si ZR_{X} = "0", ou bien fin de l'étape E3 si ZR_{X} = "1".

13. Circuit programmable comprenant au moins une unité de commande (UC), une mémoire morte (ROM1) comprenant des données à transférer, une mémoire inscriptible (RAM1) et un bus de données (DBUS) connecté entre la mémoire morte (ROM1) et la mémoire inscriptible (RAM1), le bus de données (DBUS) étant commandé par l'unité de commande (UC), et un générateur de nombre aléatoires (GA) pour fournir à l'unité de commande (UC) au moins un nombre aléatoire, le circuit programmable étant adapté pour mettre en oeuvre le procédé **caractérisé** selon l'une des revendications 1 à 12.

## Patentansprüche

1. Verfahren zum gesicherten Übertragen von Daten in einerprogrammierbaren Schaltung (CP), die zumindest eine Steuereinheit (UC), einen Festspeicher (ROM1), der zu übertragende Daten aufweist, einen beschreibbaren Speicher (RAM1) und einen Daten-bus (DBUS) aufweist, der zwischen dem Festspeicher (ROM 1) und dem beschreib baren Speicher (RAM 1) angeschlossen ist, wobei der Datenbus (DBUS) von der Steuereinheit (UC) gesteuert ist, wobei eine geheime Größe von N Bytes byteweise den Daten-bus (DBUS) durchläuft, wobei jedes Byte zumindest einmal den Datenbus (DBUS) durchläuft, **dadurch gekennzeichnet, dass** die Gewichtung eines zu übertragenden Bytes einem Laufindex (X) entspricht, der zufällig vor jeder Übertragung eines Bytes gewählt wird und zwischen 0 und N-1 liegt, und
dass bei jeder Übertragung eines Bytes der gesicherten Größe mit der Gewichtung, die dem Laufindex (X) entspricht, ein Bit der gleichen Gewichtung (X) eines Ladeindikators (ZR) von N Bits in Abhängigkeit von einem Ladewert (TMP) geändert wird, wobei der Ladewert (TMP) eine ganze Zahl zwischen Null und einer ersten Konstante (NBCH) ist und bevor jeder Übertragung eines Bytes der geheimen Größe geändert wird, wobei die Übertragung der geheimen Größe vollständig erfolgt, während der Ladeindikator (ZR) einen vorbestimmten Wert (I_{N}) einnimmt.

2. Verfahren nach Anspruch 1, **dadurch gekennzeichnet, dass** der Ladewert (TMP) zufällig durch die Steuereinheit (UC) vor jeder Übertragung eines Bytes der geheimen Größe ausgewählt wird.

3. Verfahren nach Anspruch 1 oder 2, **dadurch** gekennzeiehnet, dass das Bit (ZRx) des Ladeindikators (ZR) mit der gleichen Gewichtung wie der Laufindex (X) einen ersten Wert (" 1") einnimmt, wenn der Ladewert (TMP) einer zweiten Konstante (BON) entspricht, und einen zweiten Wert ("0") sonst einnimmt, wobei die zweite Konstante (BON) kleiner oder gleich der ersten Konstante (NBCH) ist.

4. Verfahren nach Anspruch 3, **dadurch gekennzeichnet, dass** ein Byte einer Gewichtung, die dem Laufindex (X) der geheimen Größe entspricht, den Datenbus (DBUS) durchläuft, wenn der Ladewert (TMP) der zweiten Konstanten (BON) entspricht, und das Byte mit der Gewichtung, die dem Laufindex (X) einer falschen Größe entspricht, den Datenbus (DBUS) im sonstigen Fall durchläuft, wobei die falsche Größe in dem Festspeicher (ROM 1) gespeichert wird.

5. Verfahren nach Anspruch 3 oder 4, **dadurch gekennzeichnet, dass** die erste Konstante (NBCR) und die zweite Konstante (BON) zufällig bei einem Initialisierungsschritt (E0) des Verfahrens ausgewählt werden.

6. Verfahren nach Anspruch 3 oder 4, **dadurch gekennzeichnet, dass** die erste Konstante (NBCH) und die zweite Konstante (BON) durch die Steuereinheit (UC) beim Initialisierungsschritt (E0) des Verfahrens aus dem Festspeicher (ROM 1) gelesen werden.

7. Verfahren nach einem der Ansprüche 3 bis 6, **dadurch gekennzeichnet, dass** die erste (NBCH) und die zweite (BON) Konstante gleich sind.

8. Verfahren nach Anspruch 1 **gekennzeichnet durch** die folgenden Schritte:
E0: Initialisierung des Verfahrens,
E1: Auswahl des Laufindex (X) zwischen 0 und N-1,
E2: Auswahl des Ladewerts (TMP) zwischen 0 und der ersten Konstante (NBCH),
E3: Ladung in beschreibbaren Speicher (RAM1) eines Bytes mit der Gewichtung, die dem Laufindex (X) entspricht und Ändern des Bits (ZRₓ) mit der gleichen Gewichtung (X) des Ladeindikators (ZR) in Abhängigkeit von dem Ladewert (TMP),
E4: Durchführen eines ersten Tests, um den Wert des Ladeindikators (ZR) mit einem vorbestimmten Wert (Iₙ) zu vergleichen, und anschließend:
- wenn der erste Test negativ ist (ZR ≠ Iₙ), Wiederholen der Schritte 1 bis 3, oder aber
- wenn der erste Test positiv ist (ZR = Iₙ), ist das Verfahren beendet.

9. Verfahren nach Anspruch 8, **dadurch gekennzeichnet, dass** der Schritt E3 folgende Unterschritte aufweist:
ET30: Ausführen eines zweiten Tests, um den Wert des Ladewerts (TMP) mit dem Wert der zweiten Konstante (BON) zu vergleichen und:
wenn der zweite Test (ET30) positiv ist (TMP = BON) Ausführen der Schritte ET31 bis ET33:
ET31: Lesen in den Festspeicher (ROM1) des Bytes (Octₓ) mit der Gewichtung, die im Laufindex (X) der zu übertragenden geheimen Größe entspricht und Speichern des gelesenen Bytes in einem Register (RA) der Steuereinheit (UC),
ET32: Schreiben des im Register (RA) enthaltenen Bytes in den beschreibbaren Speicher (RAM1),
ET33: Setzen des Bits (ZRₓ) mit der Gewichtung, die die Gewichtung des Laufindex (X) des Ladeindikators (ZR) entspricht, auf "1",
wenn der zweite Test (ET30) negativ ist (TMP ≠ BON) Ausführen der vorherigen Schritte ET31, ET32 und des folgenden Schrittes ET36:
ET36: Setzen des Bits (ZRₓ) mit der Gewichtung, die dem Laufindex X des Ladeindikators (ZR) entspricht, auf Null.

10. Verfahren nach Anspruch 9, **dadurch gekennzeichnet, dass**, wenn der zweite Test negativ ist (TMP ≠ BON) der Schritt ET37 unmittelbar nach dem zweiten Test (ET30) durchgeführt wird, wobei der Schritt ET37 auf folgende Weise definiert ist:
ET37: Test des Wertes des Bits (ZRₓ) der Gewichtung, die dem Laufindex (X) des Indikators (ZR) entspricht und Ausführen der Schritte ET31, ET32 und ET36, wenn ZRₓ = "0" ist, oder Ende des Schrittes E3, wenn ZRₓ = "1".

11. Verfahren nach Anspruch 8, **dadurch gekennzeichnet, dass** der Schritt E3 die folgenden Schritte aufweist:
ET30: Ausführen eines zweiten Tests, um den Wert des Ladewerts (TMP) mit dem Wert der zweiten Konstante (BON) zu vergleichen, und anschließend
wenn der zweite Test ET30 positiv ist (TMP = BON), Ausführen der folgenden Schritte ET31 bis ET33:
ET31: Lesen in den Festspeicher (ROM1) des Bytes (Octₓ) mit der Gewichtung, die dem Laufindex der zu übertragenden geheimen Größe entspricht und Speichern des gelesenen Bytes in einem Register (RA) der Steuereinheit (UC),
ET32: Schreiben des in dem Register (RA) enthaltenen Bytes in den beschreibbaren Speicher (RAM1),
ET33: Setzen des Bits (ZRₓ) mit der Gewichtung, die dem Laufindex (X) des Ladeindikators (ZR) entspricht, auf "1",
wenn der zweite Text ET30 negativ ist (TMP ≠ BON) Ausführen der folgenden Schritte ET34 bis ET36:
ET34: Lesen in den Festspeicher (ROM1) eines Bytes einer falschen Größe, wobei die Gewichtung des gelesenen Bytes gleich dem Laufindex (X) entspricht und schließlich Speichern des gelesenen Bytes in dem Register (RA) der Steuereinheit (UC),
ET35: Schreiben in den beschreibbaren Speicher (RAM1) des in dem Register (RA) enthaltenen Bytes,
ET36: Setzen des Bits (ZRₓ) mit der Gewichtung, die dem Laufwerkindex (X) des Ladeindikators (ZR) entspricht, auf "0".

12. Verfahren nach Anspruch 11, **dadurch gekennzeichnet, dass**, wenn der zweite Test ET30 negativ ist (TMP ≠ BON) der Schritt ET37' unmittelbar nach dem zweiten Test (ET30) durchgeführt wird, wobei der Schritt ET37' auf folgende Art definiert ist:
ET37': Test des Bit-Wertes (ZRₓ) mit der Gewichtung, die dem Laufindex (X) des Indikators (ZR) entspricht, anschließend Ausführen der Schritte ET34 bis ET36, wenn ZRₓ = "0" ist oder Ende des Schrittes E3 wenn ZRₓ = 1 ist.

13. Programmierbarer Speicher, der zumindest eine Steuereinheit (UC), einen Festspeicher (ROM1), der zu übertragende Daten aufweist, einen beschreibbaren Speicher (RAM1) und einen Datenbus (DBUS) aufweist, der zwischen dem Festspeicher (ROM1) und dem beschreibbaren Speicher (RAM 1) angebracht ist, wobei der Datenbus (DBUS) durch die Steuereinheit (UC) gesteuert wird, und einen Zufallszahlgenerator (GA), der der Steuereinheit (UC) zumindest eine Zufallszahl liefert, wobei die programmierbare Schaltung das Verfahren nach einem der Ansprüche 1 bis 12 ausführen kann.

## Claims

1. Method for the secure transfer of data in a programmable circuit (CP) comprising at least one control unit (UC), a read only memory (ROM1) comprising data to be transferred, a writeable memory (RAM1) and a data bus (DBUS) connected between the read only memory (ROM1) and the writeable memory (RAM1), the data bus (DBUS) being controlled by the control unit (UC), where a secret N-byte data item transits byte by byte over the data bus (DBUS), each byte passing at least once over the data bus (DBUS), **characterised in that** the weight of the byte to be transferred is equal to a current index (X) chosen randomly before each transfer of a byte and lying between 0 and N-1, and
**in that**, at each transfer of a byte of the secret data item with a weight equal to the current index (X), a bit with the same weight (X) of an N-bit loading indicator (ZR) is modified according to a loading mode (TMP), the loading mode (TMP) being a integer number between 0 and a first constant (NBCH) and modified before each transfer of a byte of the secret data, the transfer of the secret data item being performed completely when the loading indicator (ZR) takes a predetermined value (I_{N}).

2. Method according to Claim 1, **characterised in that** the loading mode (TMP) is chosen randomly by the control unit (UC) before each transfer of a byte of the secret data item.

3. Method according to one of Claims 1 or 2, **characterised in that** the bit (ZRx) of the loading indicator (ZR) with a weight equal to the current index (X) takes a first value ("1") if the loading mode (TMP) is equal to a second constant (GOOD), and takes a second value ("0") otherwise, the second constant (GOOD) being less than or equal to the first constant (NBCH).

4. Method according to Claim 3, **characterised in that** a byte with a weight equal to the current index (X) of the secret data item passes over the data bus (DBUS) if the loading mode (TMP) is equal to the second constant (GOOD), and **in that** a byte with a weight equal to the current index (X) of a false data item passes over the data bus (DBUS) in the contrary case, the false data item being stored in the read only memory (ROM1).

5. Method according to one of Claims 3 or 4, **characterised in that** the first (NBCH) and second (GOOD) constants are chosen randomly during a step (E0) of initialisation of the method.

6. Method according to one of Claims 3 or 4, **characterised in that** the first (NBCH) and second (GOOD) constants are read by the control unit (UC) in the read only memory (ROM1) during the step (E0) of initialisation of the method.

7. Method according to one of Claims 3 to 6, **characterised in that** the first (NBCH) and second (GOOD) constants are identical.

8. Transfer method according to Claim 1, **characterised in that** it comprises the following steps:
E0: initialisation of the method,
E1: choice of the current index (X), lying between 0 and N-1,
E2: choice of the loading mode (TMP), lying between 0 and the first constant (NBCH),
E3: loading, into the random access memory (RAM1), a byte with a weight equal to the current index (X), and modifying the bit (ZRₓ) with the same weight (X) of the loading indicator (ZR), according to the loading mode (TMP),
E4: performance of a first test for comparing the value of the loading indicator (ZR) with a predetermined value (I_{N}), and then:
- if the first test is negative (ZR ≠ I_{N}), performing new steps E1 to E3, or,
- if the first test is positive (ZR = I_{N}), the method ends.

9. Transfer method according to Claim 8, **characterised in that** step E3 comprises the following substeps:
ET30: performance of a second test for comparing the value of the loading mode (TMP) with the value of the second constant (GOOD), and then:
- if the second test (ET30) is positive (TMP = GOOD), performing steps ET31 to ET33:
ET31: reading, in the read only memory (ROM1), the byte (Octₓ) with a weight equal to the current index (X) of the secret data item to be transferred, and storing the byte read in a register (RA) of the control unit (UC),
ET32: writing, in the random access memory (RAM1), the byte contained in the register (RA),
ET33: setting to "1" the bit (ZRₓ) with a weight equal to the current index (X) of the loading indicator (ZR),
- if the second test (ET30) is negative (TMP ≠ GOOD), performing the previous steps ET31, ET32 and the following step ET36:
ET36: setting to "0" the bit ZRₓ with a weight equal to the current index (X) of the loading indicator (ZR).

10. Method according to Claim 9, **characterised in that**, if the second test is negative (TMP ≠ GOOD), step ET37 is performed immediately after the second test (ET30), step ET37 being defined as follows:
ET37: test on the value of the bit (ZRₓ) with a weight equal to the current index (X) of the indicator (ZR), and then performance of steps ET31, ET32 and ET36 if ZRₓ = "0", or ending of step E3 if ZRₓ = "1".

11. Transfer method according to Claim 8, **characterised in that** step E3 comprises the following substeps:
ET30: performing a second test for comparing the value of the loading mode (TMP) with the value of the second constant (GOOD), and then:
- if the second test (ET30) is positive (TMP = GOOD), performing the following steps ET31 to ET33:
ET31: reading, in the read only memory (ROM1), the byte (Octₓ) with a weight equal to the current index (X) of the secret data item to be transferred, and storing the byte read in a register (RA) of the control unit (UC),
ET32: writing, in the random access memory (RAM1) the byte contained in the register (RA),
ET33: setting to "1" the bit (ZRₓ) with a weight equal to the current index (X) of the loading indicator (ZR),
- if the second test (ET30) is negative (TMP ≠ GOOD), performing the following steps ET34 to ET36:
ET34: reading, in the read only memory (ROM1), a byte of a false data item, the weight of the byte read being equal to the current index (X), and then storing the byte read in the register (RA) of the control unit (UC),
ET35: writing, in the random access memory (RAM1), the byte contained in the register (RA),
ET36: setting to "0" the bit ZRₓ with a weight equal to the current index (X) of the loading indicator (ZR).

12. Method according to Claim 11, **characterised in that**, if the second test (ET30) is negative (TMP ≠ GOOD), step ET37' is performed immediately after the second test (ET30), step ET37' being defined as follows:
ET37': testing of the value of the bit (ZRₓ) with a weight equal to the current index (X) of the indicator (ZR), and then performance of steps ET34 to ET36 if ZRₓ = "0", or end of step E3 if ZRₓ = "1".

13. Programmable circuit comprising at least one control unit (UC), a read only memory (ROM1) comprising data to be transferred, a writeable memory (RAM1) and a data bus (DBUS) connected between the read only memory (ROM1) and the writeable memory (RAM1), the data bus (DBUS) being controlled by the control unit (UC),
a random number generator (GA) for supplying to the control unit (UC) at least one random number, the programmable circuit being adapted to implement the method **characterised** according to one of Claims 1 to 12.
